# EUROPEAN PATENT APPLICATION

(11) **EP 1 514 667 A1**
(43) Date of publication of application: **16.03.2005**
(21) Application number: 04021200.3
(22) Date of filing: 07.09.2004
(51) Int. Cl.: B29C 49/70, B29C 49/54

(54) **Use of air assist to eject roller bottle with deep punt**

(30) Priority: 09.09.2003 US 501544 P; 01.09.2004 US 932582
(71) Applicant: Becton, Dickinson and Company, Franklin Lakes, New Jersey 07417 (US)
(72) Inventor: Whitley, Kenneth W., Raleigh North Carolina 27615 (US)
(74) Representative: von Kreisler Selting Werner

(57) **Abstract**

A method of forming a hollow container, such as a roller bottle (10), having a bottom surface (14) including an inwardly directed punt (22/22) is provided, which uses air assist to eject the formed container. The method includes providing a blow mold (30) having a pair of blow mold halves (32) and a central blow mold portion (34) defining a mold cavity. The central mold portion has an extended portion (43) for defining the punt. The method further includes inserting a preform (38) within the mold cavity and expanding the preform to form the container (10). Once the container is formed, the mold halves are opened and the central blow mold portion is withdrawn from the cavity while injecting gas into the mold cavity through a poppet valve (48) in the central blow mold portion so as to release the formed container from the blow mold. In particular, blowing air between the plastic of the formed punt and the central blow mold portion prevents the central blow mold portion from sticking to the walls of the punt.

## Description

### BACKGROUND OF THE INVENTION

### RELATED APPLICATIONS

This application claims the benefit of U.S. Provisional Application No. 60/501,544 filed on September 9, 2003 which is hereby incorporated by reference in its entirety.

### 1. Field of the Invention

The present invention relates to a method of manufacturing blow molded hollow containers. More particularly, the invention relates to a method of ejecting a hollow container having a bottom surface including an inwardly directed punt from a blow mold.

### 2. Description of Related Art

One type of container commonly used in a laboratory for culturing of cells is known as a "roller bottle". Roller bottles are generally cylindrically shaped and are adapted to rotate about their axes. The internal surfaces of such roller bottles are for providing active surfaces for cell growth. A liquid growth medium is introduced into the roller bottle. The rotating movement of the bottle keeps the internal surfaces wetted with a liquid medium, thereby encouraging the growth of cells. Rotating rollers of an appropriate apparatus are employed to rotate these roller bottles. The roller bottles are typically arranged on the rollers of the apparatus in end-to-end, stacked relationship, with one end of one bottle being abutted against the opposite end of an adjacent bottle. A common roller bottle configuration includes a recessed portion at its bottom end for accommodating an adjacently stacked roller bottle in this manner. Such a recessed portion also provides structural strength to the bottle, and can be used as a grip when the bottle is handled.

Blow molding is the primary method used to form hollow plastic objects such as roller bottles. Known types of blow molding used in the manufacture of roller bottles include injection-stretch blow molding and parison blow molding. The process of injection-stretch blow molding will now be described in further detail below.

Injection-stretch blow molding begins by injection molding a hollow, plastic preform. The preform is then transferred to a heat conditioning station, where it is reheated so that the plastic becomes soft and pliable. This soft preform is then transferred to a stretch-blow mold station, where the preform is stretched longitudinally with a stretch rod, and immediately blown into the shape of the final product (e.g., a roller bottle) using pressurized air. The final shape of the bottle is determined by the blow mold cavities that the preform is blown against. After blow molding, the bottle is ej ected from its mold.

The deep indentation in the bottom of a bottle, such as a roller bottle, is commonly referred to as a "punt," and the portion of the blow mold that forms this punt is referred to as the "push-up." After the bottle is blow molded, two halves of the mold must open to release the bottle, while the push-up moves vertically downward until it is clear of the punt. Because the punt in the roller bottle is fairly deep, the push-up frequently sticks to the sides of the punt or will draw a vacuum within the punt as it moves vertically downward, causing the plastic in the punt to flex. This flexing can form stress cracks in the solid plastic.

Several methods are known for ejecting hollow articles from blow molds. For example, a stretch blow molding method is known for blow molding hollow articles from tubular parisons. The method includes mounting a tubular parison on a stretch pin, and then moving the stretch pin into an open multi-section molding apparatus. After stretching the parison to blow the parison into molding contact with the multi-section mold apparatus, the molds are opened and the article is ejected by air exiting from the tip of the stretch pin near the base of the article. In particular, air flows into the finished article in order to eject it from the stretch pin.

Another method is known for feeding workpieces to and discharging molded articles from a blow mold. The method includes molding a preform into a hollow article in a blow mold, opening the molds and ejecting the article through a discharge chute coaxially above the mold cavity. In particular, the formed container is disclosed as being impaled on a stretch pin and ejection occurs when high pressure air is introduced *via* conventional means, not shown, through a rod means and the pin into the formed article to cause the bottle to forceably eject upwardly through the open ends of the discharge chute to a suitable downstream station.

Methods are known which are directed toward increasing the air supply through the air vents or valves within the mold core designed to "blow" the work pieces off the core. One problem arising from these methods is the so-called Venturi effect. This effect is caused by the air escaping at the cup bottom and blowing out through the gap between the core and the plastic work piece. This can create a suction acting on the work piece so that it will advance only a short distance and then "hang" in mid-air on the core without falling free.

One known method for overcoming the Venturi effect directs pressurized air toward the closed end of the work piece to initiate the ejection, and then completes ejection by directing another stream of pressurized air towards the container rim. For example, a method is known for operating an injection molding apparatus for ejecting a cup-shaped work piece. This method employs an apparatus that includes a core defining the interior of the container. The method includes the steps of directing a first stream of gaseous material from the surface of the core into the interior of a freshly molded work piece for initiating the separation of the work piece from the core, thereby creating a peripheral gap therebetween; and thereafter directing a second stream of gaseous material toward the container rim, thereby completing ejection by urging the container away from the core.

Yet another method is known for ejecting blow-molded, hollow articles from a mold. In this method a preform is blown into the shape of a finished container against the walls of a blow mold and is cooled sufficiently so that the walls have sufficient rigidity to be self-sustaining. The blow molds halves are then parted to allow removal of the finished article from the mold. Just prior to parting, a source of vacuum is supplied so as to hold the finished article by its bottom against a base plate. As the blow mold sections part, the finished article is retained centered on the base plate and is freed from the surfaces of the blow mold cavity as the blow mold sections move away from the finished article. Once the blow mold halves have been fully retracted, the vacuum holding the finished article is terminated and high pressure air is supplied *via* a conduit to move a plunger so as to cause the finished article to be ejected from the blow mold.

While these techniques attempt to address the problem of ejecting the bottle from the mold, a need exists for other improved methods for ejecting blow-molded bottles. In particular, there is a need for an improved method for ejecting blow molded roller bottles with a deep punt so as to reduce or eliminate stress cracking in the walls of the punt which currently occurs during the process of ejecting the bottles from the molds.

### SUMMARY OF THE INVENTION

It is an object of this invention to provide a method for ejecting a bottle with a deep punt from a blow mold without stress cracking in the walls of the punt. These cracks occur when the plastic walls of the punt stick to the push-up portion of the molds used to form this indentation as it is moved down to clear the punt during ejection of the bottle from the molds.

This and other objects of the present invention are accomplished by providing an apparatus for forming a hollow container having a bottom surface including an inwardly directed punt. This blow mold apparatus includes a pair of blow mold halves that define a mold cavity therebetween, and a central mold portion inserted into the mold cavity, the central mold portion forming an inwardly directed punt. The central mold portion includes a gas conduit for injecting gas into the punt for releasing the central mold portion from the formed hollow container.

The invention further provides a method of forming a hollow container having a bottom surface including an inwardly directed punt. The method includes providing a blow mold having a pair of blow mold halves and a central blow mold portion defining a mold cavity. In particular, the central blow mold portion has an extended portion for defining the punt. The method further includes inserting a container preform within the mold cavity and expanding the preform to form the container. Once the container is formed, the mold halves are opened and the central blow mold portion is withdrawn from the punt while injecting gas into the punt through the central blow mold portion so as to release the formed container from the blow mold without stress cracking in the walls of the punt of the formed container.

### BRIEF DESCRIPTION OF THE DRAWINGS

FIG. 1 is a longitudinal cross-section of a roller bottle having a bottom surface including an inwardly directed punt.

FIG. 2 is a schematic representation of the blow mold apparatus of the present invention.

FIG. 3A is a partial sectional view of the central mold portion of the blow mold apparatus of FIG. 2.

FIG. 3B is a cross-sectional showing of the central mold portion of the blow mold apparatus of FIG. 2.

FIG. 3C is a cross-sectional showing of an air-poppet valve that can be used in the method of the present invention.

FIG. 4 is a schematic showing of the inventive method of forming a hollow container having a bottom surface including an inwardly directed punt.

### DETAILED DESCRIPTION OF THE INVENTION

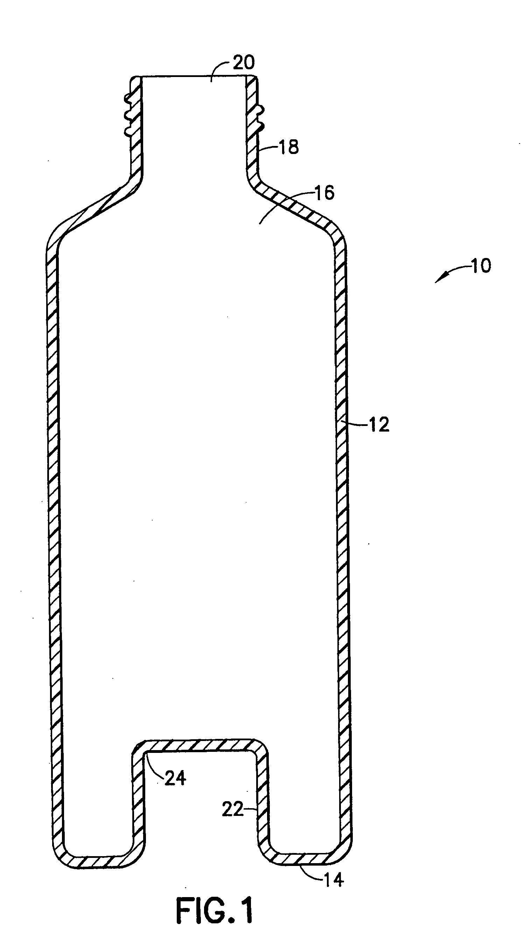

Referring now to the drawings in which like reference characters refer to like parts throughout, FIG. 1 shows a container for cell growth culturing having a bottom surface including an inwardly directed punt which may be formed using the apparatus and method of the present invention. In particular, FIG. 1 shows roller bottle **10**. As can be seen in FIG. 1, roller bottle **10** includes a cylindrical wall **12** which extends from closed bottom **14** to a top **16**. Extending from top **16**, and integral therewith, is a projecting neck portion **18** defining a liquid opening **20** through which cells and culture fluids may be introduced into the body of the container. The neck **18** may be externally screw threaded for receipt of a cap (not shown). Closed end **14** of bottle **10** includes an inwardly directed recessed portion **22**, also referred to as punt **22**, which is generally frustoconical in shape. Punt **22** includes planar surface **24**. While punts are well known in bottle design for providing structural strength, punt **22** is also shaped and proportioned to correspond to a projecting neck of a similar second bottle so as to accommodate the neck of the second bottle when the two are adjacently stacked end-to-end. Punt 22 is also shaped to act as a grip when the bottle is handled.

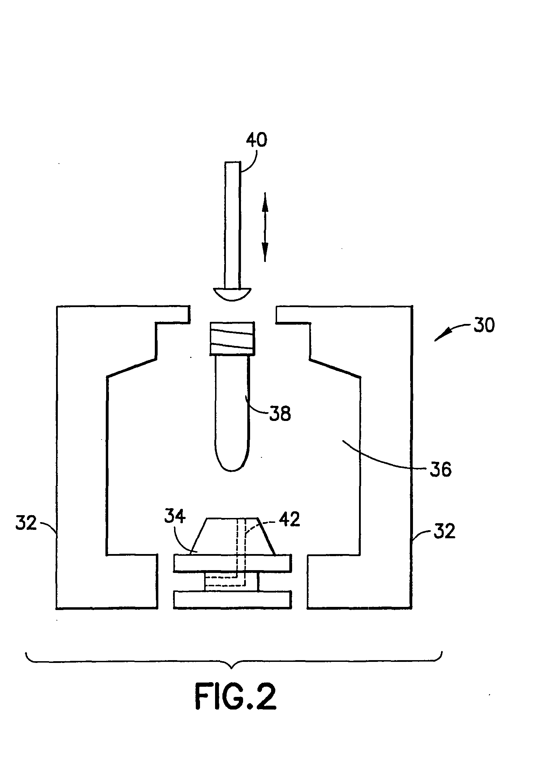

Referring now to FIG. 2, a blow mold apparatus **30** according to the present invention is shown. Blow mold apparatus **30** is for forming a hollow container, such as the roller bottle of FIG. 1, having a bottom surface including an inwardly directed punt **22**. Blow mold apparatus **30** includes a pair of blow mold halves **32** and a central mold portion **34.** Blow mold halves **32** and central mold portion **34** define a blow mold cavity **36**, in which the hollow container is formed. The central cavity **36** defines the inwardly directed punt **22** upon formation of the hollow bottle **10** from preform **38**. Preform **38**, which may be formed by techniques well known in the art, is shown following transfer to the stretch-blow mold station. The preform is stretched longitudinally with a stretch rod **40** and immediately blown into the shape of the final hollow container product (e.g., a roller bottle) using pressurized air. The final shape of the bottle is determined by the blow mold cavity **36** that the preform is blown against. Blow molding techniques are also well known in the art. After blow molding, the bottle is ejected from its mold. In order to accomplish this, the mold halves **32** are opened and the central mold portion **34** is retractable from cavity **36** upon container formation which allows gas injection through central mold portion **34** by way of valve **42** to forceably release the formed container from the central mold portion. The blow-molding method of the present invention will be described in further detail below.

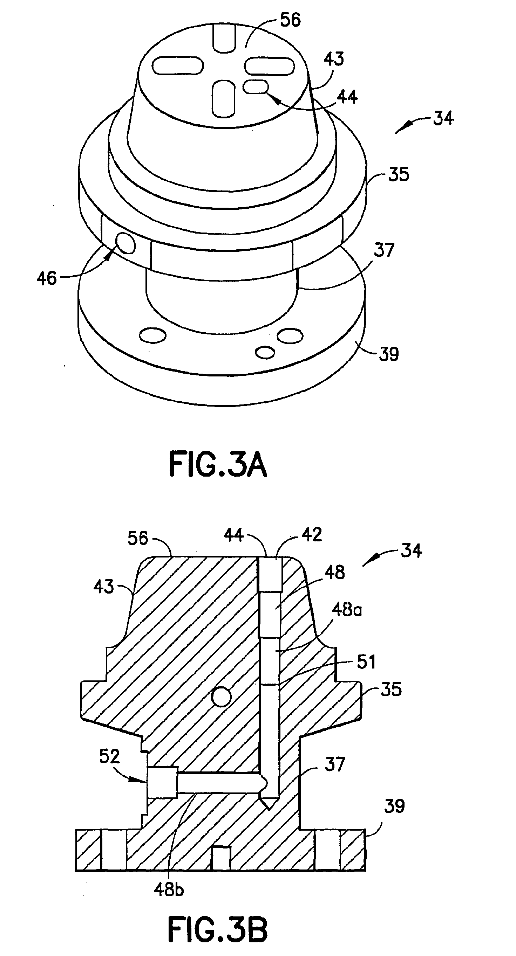

Referring now to FIGS. 3A and 3B, it can be seen that central mold portion 34 includes an upwardly projecting portion **43** which serves to define the general frustoconical shape of the punt **22** of the final container in FIG. 1. Central mold portion **34** further includes an annular rim **35** which forms the bottom of bottle **10**. A central shaft **37** extends downwardly from rim **35**. A disc-like base **39** is used to operatively mount the central mold portion **34** for movement within cavity **36**. The retractable central mold portion **34** includes water-line hole **46** at annular rim **35** which may be used to facilitate cooling of the container after is formed and prior to the opening of mold halves **32** (FIG. 2) and the retraction of central mold portion **34** from blow mold cavity **36**.

Central mold portion **34** includes a gas conduit **48** that extends through central mold portion **34**. Conduit **48** includes a vertical portion **48a** and a horizontal portion **48b** in communication therewith. Vertical portion **48a** opens at a valve hole **44** to the upper surface **56** of projection portion **43,** while horizontal portion **48b** opens in a port **52** at shaft **37**. In one embodiment, central mold portion **34** includes a regulatable valve **42** in conduit **48** to control gas flow through central mold portion **34**. Valve **42** having a valve stem **51** is located in the top surface **56** of central mold portion **34**. The valve **42** in conduit **48** is for the purpose of controlling gas flow through the conduit. In one further embodiment, central mold portion **34** includes port **52** for attaching an air supply (not shown). For example, central mold portion **34** may include screw threads at port **52** for attachment of a suitable air supply.

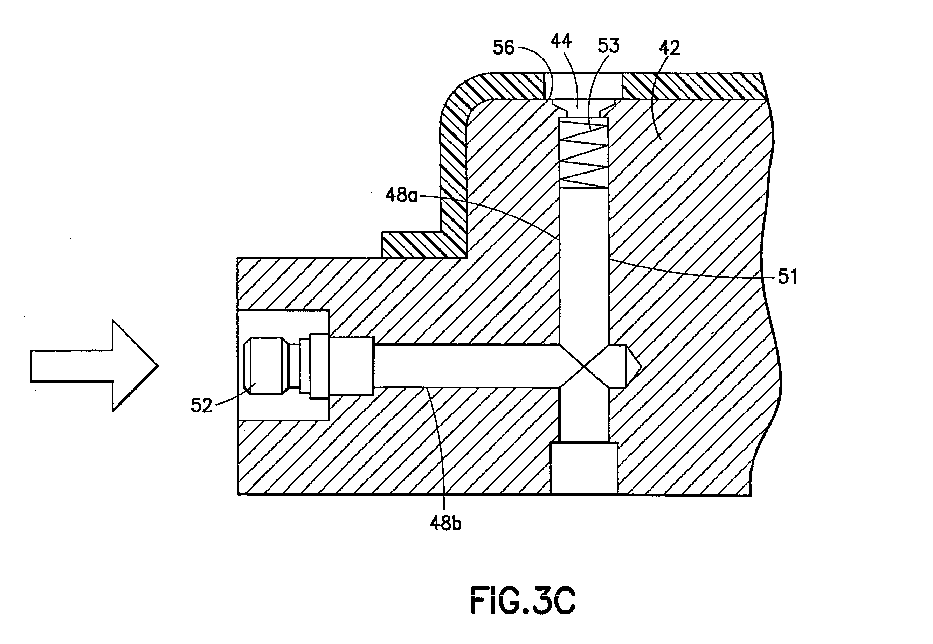

In one preferred embodiment, the valve **42** for use in providing the air assist is an air-poppet valve, an example of which is shown in FIG. 3C. Such valves are well known in the art. A suitable air-poppet valve is available from DME Mold Technologies (Madison Heights, MI), Part No. VA-01. Another supplier of air-poppet valves is PCS Company (Fraser, MI).

Referring now to FIG. 3C, valve-stem **51** in an air-poppet valve is held closed by an internal spring. **53**. When the bottle is being ejected, air is blown into conduit **48**, forcing the valve stem **51** to open and allow the air to escape into the punt **22.** After ejection, the air pressure can be cut off externally by a separate valve (not shown), allowing the spring **53** to pull the valve stem **51** in the poppet back to a closed position. The air pressure to the poppet can also be regulated externally with an adjustable regulator (not shown).

In addition to the installation of the valve in the top face **56** of the central mold portion **34**, the central mold portion **34** can be impregnated or coated at top surface **56** with a material that possesses a low coefficient of friction. This can further assist in the ejection of the final product from the mold without cracking the walls of the punt. There are several low-friction coating materials available for this in the plastics processing industry. One suitable material is called Poly-Ond from Poly Coatings (Sarasota, FL), which is composed of nickel phosphorous impregnated with Teflon. It is further contemplated that changing the surface texture of the central mold portion **34** may also assist in the ejection of the finished product from the mold.

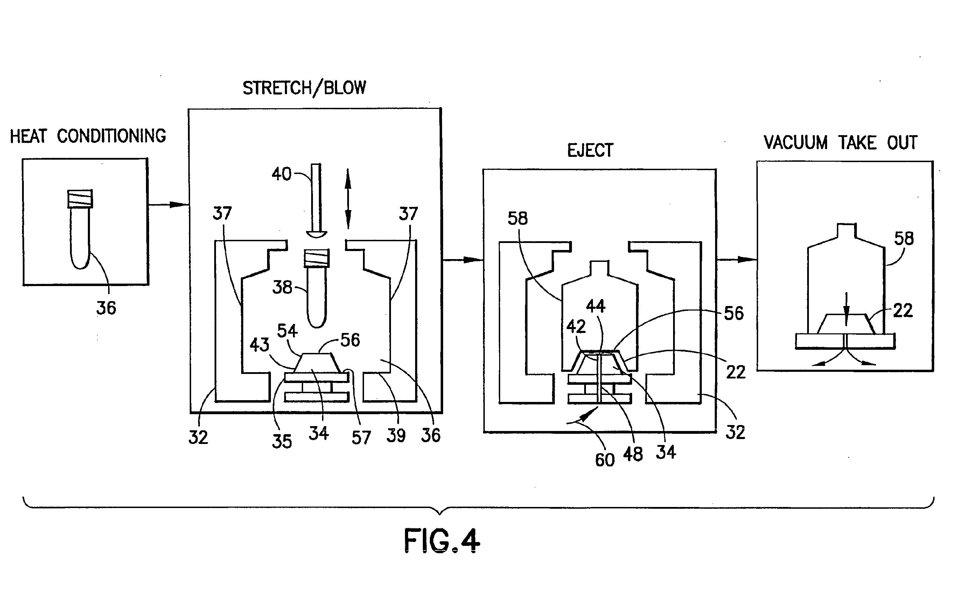

With reference now to FIG. 4, the overall method for forming a hollow container having a bottom surface including an inwardly directed punt will now be described. A container preform **38** is first inserted within mold cavity **36**. Such mold preforms are typically formed from resin pellets which are melted and then injection molded to make preforms. In general, these preforms have the .completely molded neck finish of the bottle, including the screw threads and the pouring edge, but the body is a short tube with one end closed and with a wall thickness about 8-12 times thicker than the bottle wall. Methods for forming preforms are well known in the art. The cavity **36** within which the container preform
**38** is inserted, is defined by a blow mold having a pair of blow mold halves **32** and a central mold portion **34**. Central mold portion **34** has an extended portion **43** which defines punt **22** of the finished product **58**. Central mold portion **34** also includes annular rim **35** which forms the bottom of finished product **58.** A hot preform **38** is desirably clamped in the blow mold cavity **36**. A stretch rod **40** is usually used to stretch the preform **38** against top surface **56** of the central mold portion **34**. In one embodiment, the formed product **58** is cooled by such means as conduction or evaporation of volatile fluids in container **58** prior to opening blow mold halves **32.** Blow mold halves **32** are subsequently retracted. Central mold portion **34** is then withdrawn from mold cavity **36** while injecting gas **60** in cavity **36** from valve hole **44** in a top surface **56** of central mold portion **34**. The injection of gas **60** occurs through gas conduit **48** which includes a valve **42** having valve stem **51** to control gas flow therethrough. In particular, injecting gas **60** into cavity **36** assists in freeing punt **22** from central mold portion **34**. Once central mold portion **34** has been withdrawn from cavity **36**, vacuum or mechanical take-out may be used to remove the formed article from the molding station.

## Claims

1. A method of forming a hollow container having a bottom surface including an inwardly directed punt comprising the steps of:
providing a blow mold having a pair of blow mold halves and a central blow mold portion defining a mold cavity, said central blow mold portion having an extending portion for defining said punt;
inserting a container preform within said cavity;
expanding said preform to form said container;
opening said mold halves; and
withdrawing central blow mold portion from said cavity while injecting gas into said cavity through said blow mold portion;
wherein said formed container may be released from said blow mold.

2. A method of claim 1 wherein said central blow mold portion includes a gas conduit extending therethrough.

3. A method of claim 2 wherein said central blow mold portion includes a valve in said conduit to control gas flow therethrough.

4. A method of claim 3 wherein said valve is an air-poppet valve.

5. A method of claim 1 wherein said central blow mold portion is coated or impregnated with a low-friction coating.

6. A method of claim 5, wherein said low-friction coating is nickel phosphorous impregnated with Teflon.

7. A method of claim 1 wherein said central blow mold portion includes:
an annular rim which forms said bottom surface of said hollow container;
a central shaft that extends downwardly from said annular rim; and
a disc-like base for operatively mounting said central blow mold portion for movement within said mold cavity.

8. A method of claim 1, further including the step of cooling said expanded preform prior to opening said mold halves.

9. A method of claim 1, further including the step of heating said preform prior to said expansion step.

10. A method of claim 1, wherein said hollow container is a roller bottle.

11. A blow mold apparatus for forming a hollow container having a bottom surface including an inwardly directed punt comprising:
a pair of mold halves defining a mold cavity therebetween; and
a central mold portion retractably insertable into said mold cavity, said central mold portion forming said inwardly directed punt;
said central mold portion including a gas conduit for injecting gas into said punt for releasing said central mold portion from said formed container.

12. A method of claim 11 wherein said central blow mold portion includes a gas conduit extending therethrough.

13. A method of claim 12 wherein said central blow mold portion includes a valve in said conduit to control gas flow therethrough.

14. A method of claim 13 wherein said valve is an air-poppet valve.

15. A method of claim 11 wherein said central blow mold portion is coated or impregnated with a low-friction coating.

16. A method of claim 15, wherein said low-friction coating is nickel phosphorous impregnated with Teflon.

17. A method of claim 11 wherein said central blow mold portion includes:
an annular rim which forms said bottom surface of said hollow container;
a central shaft that extends downwardly from said annular rim; and
a disc-like base for operatively mounting said central blow mold portion for movement within said mold cavity.
